# FASCICULE DE BREVET EUROPEEN

(11) **EP 3 808 075 B1**
(45) Date de publication et mention de la délivrance du brevet: **01.06.2022**
(21) Numéro de dépôt: 19729773.2
(22) Date de dépôt: 14.06.2019
(51) Int. Cl.: H04N 7/18, B60R 1/00, G02B 26/10, G03B 37/04, H04N 5/225, H04N 5/247

(54) **DISPOSITIF DE VEILLE PROXIMALE**
PROXIMALE ÜBERWACHUNGSVORRICHTUNG
PROXIMAL MONITORING DEVICE

(30) Priorité: 15.06.2018 FR 1800622
(43) Date de publication de la demande: 21.04.2021
(73) Titulaire: Safran Electronics & Defense, 75015 Paris (FR)
(72) Inventeur: DAVENEL, Arnaud, 77550 Moissy-Cramayel (FR); TOULON, Bruno, 77550 Moissy-Cramayel (FR); OLLAGNIER, Cédric, 77550 Moissy-Cramayel (FR); VIAL, Sébastien, 77550 Moissy-Cramayel (FR)
(74) Mandataire: Lavialle, Bruno François Stéphane
(86) Numéro de dépôt international: PCT/EP2019/065749
(87) Numéro de publication internationale: WO 2019/238949

(56) Documents cités:
- EP-A1- 2 860 957
- US-A1- 2011 164 108
- US-A1- 2011 249 100
- US-A1- 2014 327 733
- US-A1- 2015 138 311
- US-A1- 2016 191 813
- US-B1- 9 921 464
- SCHWARZE CRAIG R ET AL: "Risley prism scan-based approach to standoff trace explosive detection", OPTICAL ENGINEERING, SOC. OF PHOTO-OPTICAL INSTRUMENTATION ENGINEERS, BELLINGHAM, vol. 53, no. 2, 1 février 2014 (2014-02-01), page 21110, XP060048344, ISSN: 0091-3286, DOI: 10.1117/1.OE.53.2.021110 [extrait le 2013-12-31]
- Kintronics: "Optera IMM Series with SureVision 2.0", , 1 January 2017 (2017-01-01), XP055576852, Retrieved from the Internet: URL:https://kintronics.com/product-specs/O ptera%20IMM%20Series%20kintronics.pdf [retrieved on 2019-04-02]
- Anonymous: "2MP Varifocal Panorama Camera", , 1 January 2017 (2017-01-01), XP055576850, Retrieved from the Internet: URL:https://zionssecurity.com/product/2mp- varifocal-panorama-camera/ [retrieved on 2019-04-02]

## Description

La présente invention concerne le domaine de l'observation et de la surveillance de l'environnement d'un bâtiment ou d'un véhicule à partir dudit bâtiment ou véhicule.

Plus particulièrement, l'invention concerne un dispositif de veille proximale destiné à être fixé au bâtiment ou véhicule.

### ARRIERE-PLAN TECHNOLOGIQUE DE L'INVENTION

Afin de renforcer la sécurité d'une zone donnée, il est nécessaire de pouvoir détecter toute présence et déplacement à proximité de cette zone.

A cet égard, on utilise généralement un mât au bout duquel est monté un dispositif optronique permettant une observation à 360°.

Les images collectées par ce dispositif sont ensuite analysées directement depuis le lieu où se trouve le dispositif ou depuis un centre prévu à cet effet moyennant une transmission desdites images.

Un tel dispositif optronique comporte classiquement une caméra monté sur un support orientable pour permettre une vision sur 360°. Une telle caméra ne permet d'avoir une vision simultanée de l'ensemble de l'environnement.

Il est connu également de répartir plusieurs caméras en plusieurs endroits d'un bâtiment pour avoir une vue d'ensemble de l'environnement de ce bâtiment. Un tel agencement nécessite l'utilisation de caméras pourvues d'objectif grand angle pour permettre une vision la plus large possible mais ces caméras ont une portée limitée.

US 2016/191813 A1 dévoile un ensemble de caméra réglable à plusieurs têtes, doté d'un cadre de support comprenant un élément de guidage pour guider le mouvement d'inclinaison de chaque ensemble de capteur d'image, et permettant un mouvement panoramique de chaque ensemble de capteurs.

US 2015/138311 A1 montre un système de caméra panoramique à 360 degrés pour une reconnaissance de la situation dans des situations militaires, doté d'un module de boîtier de caméra adapté pour loger partiellement chacun des modules de caméra, et d'un système d'imagerie couplé à chacun des modules de caméra.

US 2011/249100 A1 dévoile un appareil pour capturer des images monoscopiques et stéréoscopiques, par ex. des images fixes, dans des détecteurs monoscopiques utilisés sur un terrain de basket, ont une caméra avec une ligne de visée définissant le champ de vision s'étendant au-delà de la plage de champ de vision d'une autre caméra.

### OBJET DE L'INVENTION

L'invention a donc pour objet de proposer un dispositif de veille proximale obviant au moins en partie aux inconvénients précités.

### PRESENTATION DE L'INVENTION

A cet effet, l'invention propose un dispositif de veille proximale comprenant une couronne définissant un volume dans lequel est montée une pluralité de caméras. Les caméras ont des champs angulairement répartis autour de ladite couronne. Et au moins l'une des caméras est associée à un dispositif de balayage en gisement dans un plan normal à un axe central de la couronne.

Le dispositif de balayage en gisement permet notamment d'augmenter la largeur du champ couvert par la caméra.

Selon une caractéristique particulière, la caméra associée au dispositif de balayage a un champ inférieur à un champ des autres caméras au moins parallèlement au plan de balayage.

Le dispositif de balayage en gisement permet donc d'utiliser une caméra ayant une portée relativement importante couvrant un champ équivalent à celui des autres caméras grâce au balayage en gisement.

Selon une autre caractéristique particulière, les caméras sont montées par paire sur une platine mobile pour interchanger les positions des caméras, les caméras de chaque paire étant sensibles à des longueurs d'onde différentes.

Par exemple, l'une des caméras de chaque paire peut être sensible à des fréquences visibles et l'autre des caméras à des fréquences infra-rouges. Le dispositif permet alors une vision proximale nocturne et diurne.

De manière particulière, les caméras comprenant des premières caméras et des deuxièmes caméras, les premières caméras ayant un champ supérieur à un champ des deuxièmes caméras.

Avantageusement, les premières caméras sont des caméras couleurs et les deuxièmes caméras sont des caméras monochromes, ou inversement.

Selon une caractéristique particulière, le dispositif comprend un diasporamètre monté entre au moins une des caméras et un hublot. Le diasporamètre est actionné par un ensemble de motorisation piloté par une unité de commande également reliée à une unité de mesure inertielle pour mesurer des mouvements de la couronne.

Le diasporamètre permet ainsi un balayage et/ou une stabilisation en gisement de la caméra. L'utilisation d'un diasporamètre peut aussi réduire le flou des images de la caméra qui est provoqué par les mouvements et tremblements de la couronne.

De préférence, au moins une des caméras est montée sur une plateforme stabilisée en site.

La plateforme permet, comme le diasporamètre, de réduire le flou provoqué par les mouvements et tremblements de la couronne. La portée optique de la caméra, et donc du dispositif, est alors augmentée.

De manière particulière, au moins une des caméras est une caméra multichamp. L'utilisation d'une telle caméra permet notamment de privilégier au choix la largeur du champ couvert par le dispositif ou bien la portée de la caméra.

### DESCRIPTION DES FIGURES

L'invention sera mieux comprise à la lumière de la description qui suit, laquelle est purement illustrative et non limitative de l'invention.

Il sera fait référence aux dessins annexés, parmi lesquels :
- la figure 1 est une vue en perspective d'un dispositif de veille proximale selon un mode de réalisation particulier de l'invention.
- la figure 2 est une vue en perspective d'une variante du dispositif de veille proximale illustré à la figure 1.

### DESCRIPTION DETAILLEE DE MODES DE REALISATION PARTICULIERS

### DE L'INVENTION

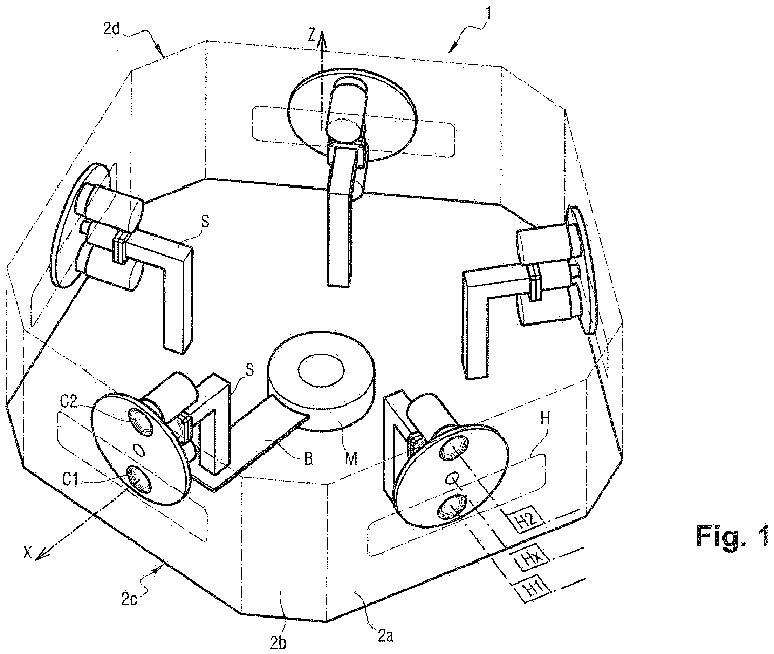

Sur la figure 1 est représenté un dispositif de veille proximale, généralement désigné en 1, selon un mode de réalisation de l'invention.

Le dispositif de veille proximale 1 comporte une couronne 2 qui forme un boîtier et est centrée sensiblement sur un axe Z vertical. La couronne 2 a un contour extérieur de forme principalement pentagonale régulière et a une surface latérale extérieure comportant cinq facettes principales 2a de tailles identiques qui sont reliées entre elles par des facettes secondaires 2b de plus petites tailles via des arêtes communes.

Les facettes principales 3a sont pourvues en leur centre d'un hublot H de forme sensiblement rectangulaire occupant ici la moitié inférieure desdites facettes principales 3a.

La couronne 2 comprend également une surface inférieure 2c raccordée aux arêtes inférieures des facettes principales 2a et aux arêtes inférieures des facettes secondaires 2b. De la même manière, la couronne 2 comprend également une surface supérieure 2d raccordée aux arêtes supérieures des facettes principales 2a et aux arêtes supérieures des facettes secondaires 2b.

Les facettes principales 2a, les facettes secondaires 2b, la surface inférieure 2c et la surface supérieure 2d de la première couronne 2 forment un volume dans lequel sont agencées cinq premières caméras C1 et cinq deuxièmes caméras C2, toutes pointant vers l'extérieur de la couronne.

Les axes de prise de vue des premières caméras C1 s'étendent dans un plan H1 sensiblement horizontal, c'est-à-dire dans un plan orthogonal à l'axe Z de la couronne 2, en coupant l'axe Z et en passant par les centres des hublots H. Les champs des premières caméras C1 sont ainsi angulairement répartis autour de la couronne 2 et les premières caméras C1 sont symétriquement réparties à l'intérieur de la couronne 2.

Les premières caméras C1 sont sensibles à des fréquences du domaine visible et la distance séparant les premières caméras C1 des hublots H est telle que les champs des premières caméras C1 ne sont pas limités par les dimensions des hublots H.

Les axes de prise de vue des deuxièmes caméras C2 s'étendent dans un plan H2 sensiblement parallèle au plan H1, c'est-à-dire dans un plan orthogonal à l'axe Z de la couronne 2, en étant verticalement alignés avec les axes de prises de vue des premières caméras C1. Les champs des deuxièmes caméras C2 sont ainsi angulairement répartis autour de la couronne 2 de manière identique aux champs des premières caméras C1 et les deuxièmes caméras C2 sont symétriquement réparties à l'intérieur de la couronne 2.

Les deuxièmes caméras C2 sont sensibles à des fréquences du domaine infrarouge et les dimensions des hublots H ne permettent pas aux deuxièmes caméras C2 de voir en l'état l'extérieur de la couronne 2.

Les hublots H sont réalisés en un matériau apte à protéger les caméras des agressions extérieures tout en étant transparent aux rayonnements ayant des longueurs d'ondes compris dans le domaine de sensibilité des caméras C1, C2.

Les premières caméras C1 et les deuxièmes caméras C2 de la couronne 2 ont par exemple les caractéristiques suivantes :

| | *Caméra C1* | *Caméra C2* |
|---|---|---|
| *Portée* | 4km | 4km |
| *Résolution* | 3840×2160 | 3840×2160 |
| *Champ* | 20°×12° | 20°×12° |

Les premières caméras C1 et les deuxièmes caméras C2 sont montées par paire sur des platines P de forme circulaire agencées parallèlement aux facettes principales 2a. Chaque platine P accueille ainsi l'une des premières caméras C1 et l'une des deuxièmes caméras C2, toutes deux en regard d'une même facette principale 2a. Les platines P sont montées mobiles en rotation sur des supports S suivant des axes X orthogonaux aux facettes principales 2a de la couronne 2. Les axes X coupent l'axe Z et s'étendent dans un plan Hx situé au milieu des plans H1 et des plans H2 des axes de prises de vue caméras C1, C2.

Une rotation de 180 degrés des platines P suivant leur axe X de rotation permet d'interchanger les positions des premières caméras C1 et des deuxièmes caméras C2 et ainsi permettre de placer derrière chaque hublot H soit la caméra C1 soit la caméra C2 d'une même paire. Les premières caméras C1 sont utilisées pour assurer une veille proximale de jour et les deuxièmes caméras C2 sont utilisées pour assurer une veille proximale de nuit.

Quatre des cinq supports S sont fixés solidairement à la surface inférieure 2c de la couronne 2. L'un des cinq supports S est fixé solidairement à un bras B monté mobile en rotation autour de l'axe Z via un moteur M. Le bras B et le moteur M permet ainsi à l'une des premières caméras C1 et à l'une des deuxièmes caméras C2 de réaliser un balayage en gisement dans un plan normal à l'axe Z de la couronne 2.

Bien entendu, les premières caméras C1 ne sont pas nécessairement identiques. Du fait de la présence du dispositif de balayage B, M, on pourra par exemple envisager que la première caméra C1 et la deuxième caméra C2 fixées sur la platine S montée mobile en rotation autour de l'axe Z a un champ inférieur au champ des autres premières caméras C1 et au champ des autres deuxièmes caméras C2, notamment parallèlement au plan du balayage en gisement.

Bien que sur la figure 1, à des fins de simplification de la figure, seul l'un des supports soit monté mobile, les cinq supports S peuvent être mobiles. Dans ce cas, à titre d'exemple, on peut utiliser des caméras ayant un angle de champ, parallèlement au plan de balayage, de 20° et piloter les moteurs M pour obtenir un balayage de chaque caméra sur un angle de 52°. Les caméras couvriront alors un champ de 360° globalement.

On pourra également envisager que les premières caméras C1 sont des caméras couleurs et que les deuxièmes caméras C2 sont des caméras monochromes, ou bien encore que les premières caméras C1 et/ou les deuxièmes caméras C2 sont des caméras multichamp.

Avantageusement, chaque support S pourra être monté de manière connu en soi sur une plateforme stabilisée en site pour réduire l'effet de flou de bougé sur les images acquises par les premières caméras C1 et les deuxièmes caméras C2. Chaque caméra ou paire de caméras peut ainsi être équipée d'un dispositif mécanique de stabilisation d'image pour réduire l'effet de flou de bougé sur les images acquises par les caméras. Le dispositif mécanique de stabilisation d'image peut comporter de manière connue en soi une plaque mobile sur laquelle est fixée solidairement la caméra. L'inclinaison de la plaque mobile, et donc celle de la caméra, est contrôlée par des moteurs électriques, et un débattement linéaire dans deux directions du plan de prise de vue est contrôlé par deux actionneurs linéaires. Les moteurs électriques et les actionneurs linéaires sont pilotés par une unité de commande également reliée à des capteurs de vitesse angulaire et des accéléromètres pour compenser les mouvements et les tremblements du boîtier ou du véhicule pourvu du dispositif perçus par lesdits capteurs de vitesse angulaire et accéléromètres.

L'ensemble des caméras peut également être fixé sur un support commun stabilisé. La stabilisation est particulièrement intéressante dans l'hypothèse où le dispositif équipe un véhicule ou est soumis à des vibrations.

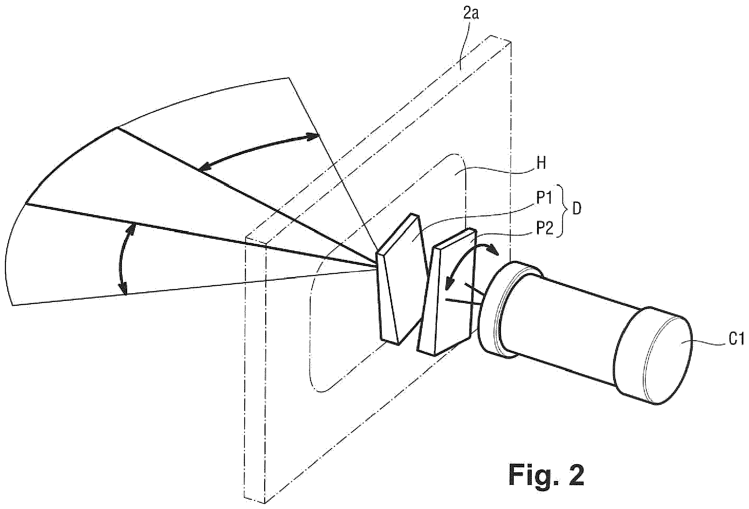

Comme illustré à la figure 2, le dispositif de balayage B, M peut être remplacé par un diasporamètre D, appelés aussi prismes de Risley, agencé entre la première caméra C1 et le hublot H. Le diasporamètre D comporte de manière connue en soi deux prismes V1, V2 pouvant tourner l'un par rapport à l'autre selon l'axe de prise de vue de la première caméra C1. Chaque prisme V1, V2 est entraîné en rotation par un moteur piloté par une unité de commande reliée à une unité de mesure inertielle pour mesurer des mouvements de la couronne 2. On comprend que la rotation relative des prismes V1, V2 modifie l'angle de la face d'entrée du diasporamètre D par rapport à l'axe de prise de vue de la caméra pour dévier une portion dudit axe de prise de vue. Le diasporamètre D permet ainsi d'atteindre des déviations de l'axe de prise de vue de la première caméra C1 pouvant être comprises entre -30° et +30° de part et d'autre d'une position centrale.

Bien entendu, l'invention n'est pas limitée aux modes de réalisation décrits mais englobe toute variante entrant dans le champ de l'invention telle que définie par les revendications.

Bien qu'ici la couronne 2 comporte cinq premières et deuxièmes caméras, le nombre de caméras peut être différent.

Par caméra, on entend au moins un capteur optronique équipé ou non d'un ensemble optique comprenant une ou plusieurs lentilles.

Les capteurs des caméras infrarouges peuvent être refroidis ou non.

La couronne peut ne comprendre que des caméras d'un seul type.

Les caméras peuvent être de plusieurs types sans qu'un montage par paire sur une platine rotative ne soit employé.

La couronne peut comprendre n caméras ayant chacune un angle de champ A, dans le plan de balayage, inférieur à 360°/n. Si toutes les caméras ont le même angle de champ A, il sera nécessaire que chaque caméra soit mobile sur un angle de balayage de 360°/n - A.

A contrario, les caméras peuvent avoir des angles de champ et des angles de balayage différents.

La couronne peut avoir une forme différente de celles décrites. En particulier, elle peut avoir une surface latérale cylindrique à contour circulaire.

Le boîtier ici en forme de couronne peut avoir une autre forme.

Selon les applications, le boîtier peut être étanche ou pas.

Les hublots peuvent être plans ou avoir une autre forme et être par exemple légèrement incurvés autour d'un axe horizontal.

La couronne peut être montée en haut d'un mât fixe ou rotatif.

Les premières caméras C1 peuvent avoir un champ inférieur aux deuxièmes caméras C2 et inversement. La portée des deuxièmes caméras C2 peut par exemple être divisée par deux par rapport à celle des premières caméras C1, ou inversement.

Le diasporamètre peut comprendre un nombre différent de prismes et par exemple trois prismes.

Le dispositif de stabilisation et/ou le dispositif de balayage en gisement peuvent avoir une autre structure que celle décrite. Ainsi, un système optique peut être agencé au centre de la couronne. Le système optique comprend un miroir prismatique dont un axe est confondu avec l'axe Z. Le miroir est solidaire d'une plaque mobile dont l'inclinaison et la position angulaire autour de l'axe Z sont contrôlées par des moteurs électriques pilotés par une unité de commande reliée à des capteurs de vitesse angulaire pour compenser les mouvements et les tremblements de la couronne ou du véhicule pourvu du dispositif. Les caméras sont orientées non pas vers les hublots pour viser à l'extérieur de la première couronne mais vers le miroir pour viser le hublot par réflexion sur le miroir. En position nominale, le miroir est conformé de façon à ce que les axes de prise de vue réfléchis des caméras traversent les hublots sensiblement à mi-hauteur. Une modification de l'inclinaison du miroir permet un balayage en site et une rotation du miroir permet un balayage en gisement des caméras. Le système optique forme ainsi un dispositif de stabilisation et de balayage commun à l'ensemble des caméras. On notera que le système optique peut être modifié pour n'assurer que la stabilisation ou que le balayage en gisement.

Les caractéristiques numériques des caméras sont données à titre purement illustratif et devront être déterminées en vue des performances souhaitées du dispositif pour l'application envisagée.

## Revendications

1. Dispositif de veille proximale, comprenant un boîtier définissant un volume dans lequel est montée une pluralité de caméras ayant des champs angulairement répartis autour du boîtier, au moins l'une des caméras étant associée à un dispositif de balayage en gisement dans un plan normal à un axe central du boîtier, **caractérisé en ce que** les caméras sont montées par paire sur une platine mobile pour interchanger les positions des caméras, les caméras de chaque paire étant sensibles à des longueurs d'onde différentes.

2. Dispositif selon la revendication 1, dans lequel la caméra associée au dispositif de balayage a un champ inférieur à un champ des autres caméras au moins parallèlement au plan de balayage.

3. Dispositif selon l'une quelconque des revendications précédentes, les caméras comprenant des premières caméras et des deuxièmes caméras, les premières caméras ayant un champ supérieur à un champ des deuxièmes caméras.

4. Dispositif selon la revendication 3, dans lequel les premières caméras sont des caméras couleurs et les deuxièmes caméras sont des caméras monochromes, ou inversement.

5. Dispositif selon l'une quelconque des revendications précédentes, comprenant un diasporamètre monté entre au moins une des caméras et un hublot, le diasporamètre étant actionné par un ensemble de motorisation piloté par une unité de commande également reliée à une unité de mesure inertielle pour mesurer des mouvements du boîtier.

6. Dispositif selon l'une quelconque des revendications précédentes, dans lequel au moins une des caméras est montée sur une plateforme stabilisée en site.

7. Dispositif selon l'une quelconque des revendications précédentes, dans lequel au moins une des caméras est une caméra multichamp.

8. Dispositif selon l'une quelconque des revendications précédentes, dans lequel chacune des caméras est associée à un dispositif de balayage en gisement.

## Patentansprüche

1. Proximale Überwachungsvorrichtung, umfassend ein Gehäuse, das ein Volumen definiert, in dem eine Vielzahl von Kameras angebracht ist, die Felder haben, die winkelmäßig um das Gehäuse herum verteilt sind, wobei mindestens eine der Kameras mit einer Abtastvorrichtung zur Abtastung in Azimut in einer zu einer Mittelachse des Gehäuses senkrechten Ebene verbunden ist, **dadurch gekennzeichnet, dass** die Kameras paarweise an einer beweglichen Platte montiert sind, um die Positionen der Kameras auszutauschen, wobei die Kameras jedes Paares empfindlich für unterschiedliche Wellenlängen sind.

2. Vorrichtung nach Anspruch 1, bei der die mit der Abtastvorrichtung verbundene Kamera ein Feld hat, das kleiner als ein Feld der anderen Kameras ist, zumindest parallel zur Abtastebene.

3. Vorrichtung nach einem der vorhergehenden Ansprüche, wobei die Kameras erste Kameras und zweite Kameras umfassen, wobei die ersten Kameras ein Feld haben, das größer als ein Feld der zweiten Kameras ist.

4. Vorrichtung nach Anspruch 3, bei der die ersten Kameras Farbkameras und die zweiten Kameras Monochromkameras oder umgekehrt sind.

5. Vorrichtung nach einem der vorhergehenden Ansprüche, umfassend ein Diasporameter, das zwischen mindestens einer der Kameras und einem Fenster montiert ist, wobei das Diasporameter durch eine Motorisierungsanordnung betätigt wird, die von einer Steuereinheit gesteuert wird, die ebenfalls mit einer inertialen Messeinheit zum Messen von Bewegungen des Gehäuses verbunden ist.

6. Vorrichtung nach einem der vorhergehenden Ansprüche, bei der mindestens eine der Kameras auf einer Plattform montiert ist, die in Elevation stabilisiert ist.

7. Vorrichtung nach einem der vorhergehenden Ansprüche, bei der mindestens eine der Kameras eine Mehrfeld-Kamera ist.

8. Vorrichtung nach einem der vorhergehenden Ansprüche, bei der jede Kamera mit einer Abtastvorrichtung zur Abtastung in Azimut verbunden ist.

## Claims

1. A proximal monitoring device, comprising a housing defining a volume in which a plurality of cameras are mounted that have fields that are angularly distributed around the housing, at least one of the cameras being associated with an azimuth scanning device for scanning azimuthally in a plane that is normal to a central axis of the housing, said proximal monitoring device being **characterized in that** the cameras are mounted in pairs on moving bracket plates for interchanging the positions of the cameras, each pair being mounted on a respective moving bracket plate, and the cameras in each pair being sensitive to mutually different wavelengths.

2. A device according to claim 1, wherein the camera associated with the scanning device has a field that is smaller than a field of the other cameras, at least parallel to the scanning plane.

3. A device according to either of the preceding claims, the cameras comprising first cameras and second cameras, and the first cameras having a field that is larger than a field of the second cameras.

4. A device according to claim 3, wherein the first cameras are color cameras, and the second cameras are monochrome camaras, or vice versa.

5. A device according to any preceding claim, further comprising a rotary prism mounted between at least one of the cameras and a porthole, the rotary prism being actuated by a motor drive assembly controlled by a control unit that is also connected to an inertial measurement unit for measuring movements of the housing.

6. A device according to any preceding claim, wherein at least one of the cameras is mounted on a platform that is stabilized in elevation.

7. A device according to any preceding claim, wherein at least one of the cameras is a multi-field camera.

8. A device according to any preceding claim, wherein each of the cameras is associated with an azimuth scanning device for scanning azimuthally.
